# EUROPEAN PATENT APPLICATION

(11) **EP 4 703 513 A1**
(43) Date of publication of application: **04.03.2026**
(21) Application number: 25179645.4
(22) Date of filing: 29.05.2025
(51) Int. Cl.: D06F 39/10, D06F 39/08

(54) **AN IMPROVED FILTRATION SYSTEM SUITABLE TO BE USED IN HOUSEHOLD APPLIANCES**

(30) Priority: 02.09.2024 TR 2024011547
(71) Applicant: Arçelik Anonim Sirketi, 34445 Istanbul (TR)
(72) Inventor: TARKUC, SIMGE, 34445 ISTANBUL (TR); KAYISDAG, VAROL, 34445 ISTANBUL (TR); ARIGUL, MERYEM, 34445 ISTANBUL (TR); YESILCUBUK, ALPER, 34445 ISTANBUL (TR)

(57) **Abstract**

The present invention relates to a household appliance (20) comprising a body (21); a tub (2) which is disposed in the body (21); a drum (1) which is disposed in the tub (2) and which is suitable to load the laundry; a circulation pump (5) which is disposed in the body (21) and which enables the water taken from the tub (2) to be circulated through a circulation line (7); a primary filter (8) which has a water inlet region (82) connected to the circulation line (7) and which performs prefiltering; and a secondary filter (12) which enables the fibers in the water to be filtered after the primary filter (8).

## Description

The present invention relates to a filtration system which is developed to be used in household appliances and which comprises a plurality of filters to filter the water in circulation.

In laundry washers and laundry washer-dryers, the laundry is loaded into a drum disposed in a washing tub supplied with the detergent-water mixture and is washed in the drum rotated at variable speeds. During the washing process, fibers separated from the laundry subjected to both mechanical and chemical effects are discharged, together with the water discharged at the end of the washing process, to the waste water line whereto the washing machine is connected.

The separation of lint and microfibers breaking away from textile products from waste water by means of a filtering arrangement is known in the art. Systems comprising especially cleanable filter cartridges or disposable filter cartridges are available in the art. In the said systems, filtering members with different pore openings suitable to the size of the solid waste intended to be filtered are used.

After the filtering step, wastes such as textile fibers, detergent residues and dirt accumulate on the filter surface. As the amount of accumulation increases, the active filtering area decreases and the time required for filtering increases. When the said residues reach a certain accumulation level, the filtering process stops. In case the active filter surface is clogged due to accumulation, the internal volume of the filter cartridge cannot be used efficiently. In order to clean a filter cartridge only with a full active surface area, the user is required to remove and clean the filter frequently. Replacing the filter, the surfaces of which are filled with only a small amount of solid waste, results in plastic waste. Using clean water to wash the filter surface increases the economic life of the filter, but also leads to increased water consumption. Increased water consumption does not offer an environmentally friendly solution.

The Turkish Patent Application No. TR 2019/20840 may be cited as an example of the state of the art. In the said application, a washing machine is disclosed, comprising a dispenser placed in the housing, and a filter box which is disposed on the dispenser and which has a water inlet opening connected to the circulation line and at least one filter for filtering fibers in the water.

The aim of the present invention is the realization of a household appliance providing effective filtering, wherein the particles retained on the upper surface of the filter are removed from the surface in each washing step without the need for drawing additional water from the mains and wherein the economic life and the usage time of the filter are extended.

The household appliance of the present invention comprises a body; a tub which is disposed in the body; a drum which is disposed in the tub and which is suitable to load the laundry; a circulation pump which is disposed in the body and which enables the water taken from the tub to be circulated through a circulation line; a primary filter which has a water inlet region connected to the circulation line and which performs prefiltering; and a secondary filter which enables the fibers in the water to be filtered after the primary filter. Advantageously, the household appliance of the present invention comprises a first line which enables the dirty water leaving the primary filter to be transferred to the secondary filter; a second line which enables the clean water leaving the primary filter to be transferred to the secondary filter; a washing headpiece which is connected to the second line, through which the clean water passes, and which enables the water to be sprayed onto the secondary filter located thereunder from multiple points; and a third line which enables the water filtered through the secondary filter to be transferred back to the tub. By ensuring that the surface of the second filter is cleaned with the clean water, the surface of the filter is prevented from being filled before the interior thereof and the economic life of the filter extended. Since the clean water leaving the primary filter is used, the amount of water used in the washing programs does not change. Moreover, since the washing process is performed without taking water from the mains, the need for an additional valve or pump is eliminated.

In an embodiment of the present invention, the household appliance comprises the primary filter having a casing and a filter section which is disposed in the said casing and which performs filtering. The filter section enables the retention of solid particles. Since two filter structures are used, the capacity to retain microfibers and similar solid waste is increased, and the economic life and/or the cleaning interval of the filter is extended.

In an embodiment of the present invention, the filter section is provided, having a series of filtering protrusions arranged at an inclination relative to the water flow direction and aligned with each other. The position of the filtering protrusions relative to each other affects the filtering performance. The filtering performance is controlled by changing the water flow with parallel or diagonal arrangement. Moreover, the filtering performance is changed by changing the number of rows and spacing of the filtering protrusions. Thus, the desired filtering capacity can be adjusted by configuring the filtering protrusions.

In an embodiment of the present invention, the household appliance comprises the primary filter having a water inlet region which is connected to the circulation line at one end; a first water outlet region which is connected to the first line at the other end and through which the water in the casing passes through without being filtered; and a second water outlet region which is connected to the second line and through which the water in the casing passes after being filtered. The first water outlet region is the section where water with more solid particles exits and the second water outlet region is where water with fewer solid particles exits after filtering. Thus, dirty and clean water are separated and can be used to clean the secondary filter.

In an embodiment of the present invention, the primary filter is provided, having a first chamber to which the water in the circulation line reaches first; a second chamber wherein the water is filled after being substantially cleansed of solid waste; and the filter section which separates the first chamber and the second chamber from each other. In an embodiment of the present invention, the volumes of the first chamber and the second chamber may be equal, or may differ depending on the specific configuration. The two-chamber design ensures the separation of dirty and clean water, and the filtering characteristics can be selected by modifying the chamber volumes.

In an embodiment of the present invention, the secondary filter is provided, which is configured to be removably attached to a detergent dispenser. Since the secondary filter can be removably placed into a housing in the detergent dispenser, the user can remove the secondary filter when desired for cleaning or replace the same with a new one.

In an embodiment of the present invention, the washing headpiece is provided, which is positioned at a distance from the secondary filter and which enables the clean water coming from the second line to be sprayed onto the secondary filter from multiple points. By means of the washing headpiece, the secondary filter, especially the outer surface thereof, is enabled to be cleaned. Thus, the outer part of the secondary filter is prevented from filling with solid particles and clogged. Since the filtering and washing steps are performed simultaneously, the duration of the programs remains unchanged.

In an embodiment of the present invention, a series of spraying nozzles are provided, which are positioned on the base surface of the washing headpiece facing the secondary filter. By means of the said spraying nozzles, the secondary filter is enabled to be efficiently washed. Especially, the said nozzles ensure that the water coming from a line is distributed in the washing headpiece and then sprayed.

In an embodiment of the present invention, a diverter valve is provided, which is positioned on the second line and which controls the water flow so as to allow the clean water coming from the second line only during the rinsing step to be directed to the washing headpiece. Thus, the filter is enabled to be cleaned by directing the water only during the rinsing step. Consequently, the filtering process is enabled to be performed until the rinsing step, and only during the rinsing step, the cleaning process is carried out by using water with fewer solid particles.

In an embodiment of the present invention, there are a discharge pump which enables the filtered water to be discharged after the filtering process is completed, and a discharge line which is connected to the said discharge pump. Thus, the filtered water coming from the circulation line is enabled to be discharged from the household appliance when desired.

The household appliance of the present invention can be used as a washing machine, a laundry dryer, or a laundry washer/dryer.

The household appliance realized in order to attain the aim of the present invention is illustrated in the attached figures, where:
Figure 1 - is the schematic view showing the filtering steps in the household appliance in an embodiment of the present invention.
Figure 2 - is the schematic view showing the performance of the filtering steps only during the rinsing step in the household appliance in another embodiment of the present invention.
Figure 3 - is the perspective view of a primary filter suitable to be used in the household appliance related to an embodiment of the present invention.

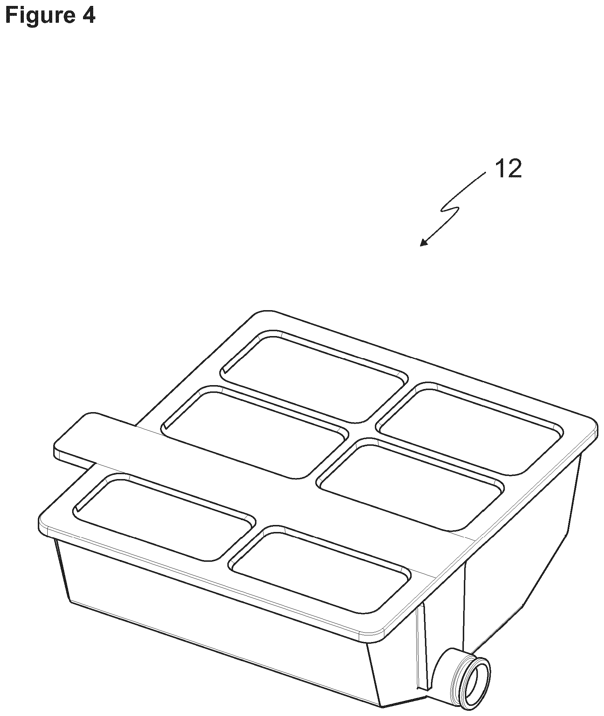

Figure 4 - is the perspective view of a secondary filter suitable to be used in the household appliance related to an embodiment of the present invention.
Figure 5 - is the top perspective view of a detergent dispenser wherein the primary filter is placed, suitable to be used in the household appliance related to an embodiment of the present invention.
Figure 6 - is the sideways perspective view of the secondary filter and a washing headpiece positioned above the secondary filter for the cleaning thereof in the household appliance in an embodiment of the present invention.
Figure 7 - is the cross-sectional perspective view of the secondary filter and the washing headpiece shown in Figure 6, showing the spraying nozzles of the washing headpiece.

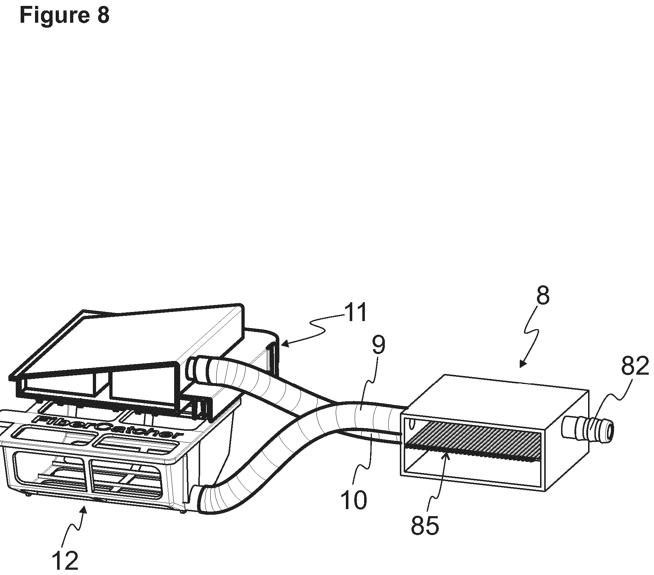

Figure 8 - is the perspective view of a filtration system composed of the primary and secondary filters and showing the connection between the said filters, suitable to be used in the household appliance related to an embodiment of the present invention. A partial cross-section of the washing headpiece is taken to show the spraying nozzles.

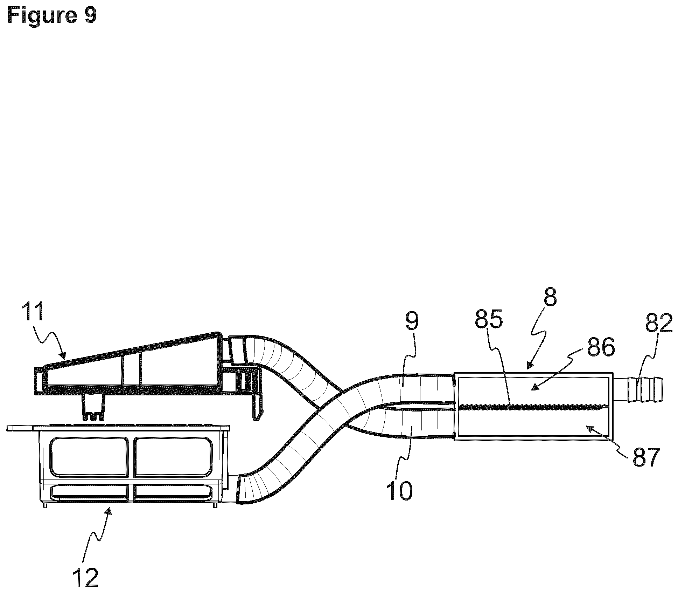

Figure 9 - is the sideways view of the filtration system shown in Figure 8.

The elements illustrated in the figures are numbered as follows:

### List of elements:

1. Drum
2. Tub
3. Discharge pump
4. Discharge line
5. Circulation pump
6. Circulation valve 61. Drum nozzle
7. Circulation line
8. Primary filter
   81. Casing
   82. Water inlet region
   83. First water outlet region
   84. Second water outlet region
   85. Filter section
      851. Filtering protrusion
   86. First chamber
   87. Second chamber
9. First line
10. Second line
11. Washing headpiece
   111. Base surface
   112. Spraying nozzle
12. Secondary filter
13. Third line
14. Diverter valve
15. Flow guiding path
16. Detergent dispenser
20. Household appliance
   21. Body

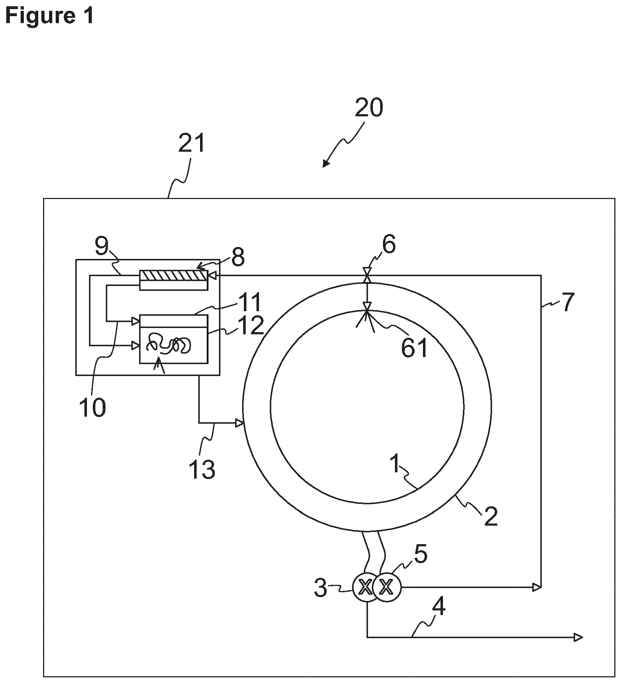

As shown in Figure 1, the household appliance (20) of the present invention comprises a body (21); a tub (2) which is disposed in the body (21); a drum (1) which is disposed in the tub (2) and which is suitable to load the laundry; a circulation pump (5) which is disposed in the body (21) and which enables the water taken from the tub (2) to be circulated through a circulation line (7); a primary filter (8) which has a water inlet region (82) connected to the circulation line (7) and which performs prefiltering; and a secondary filter (12) which enables the fibers in the water to be filtered after the primary filter (8). The primary filter (8) and the secondary filter (12) form a filtration system which enables the water in the circulation line (7) to be filtered.

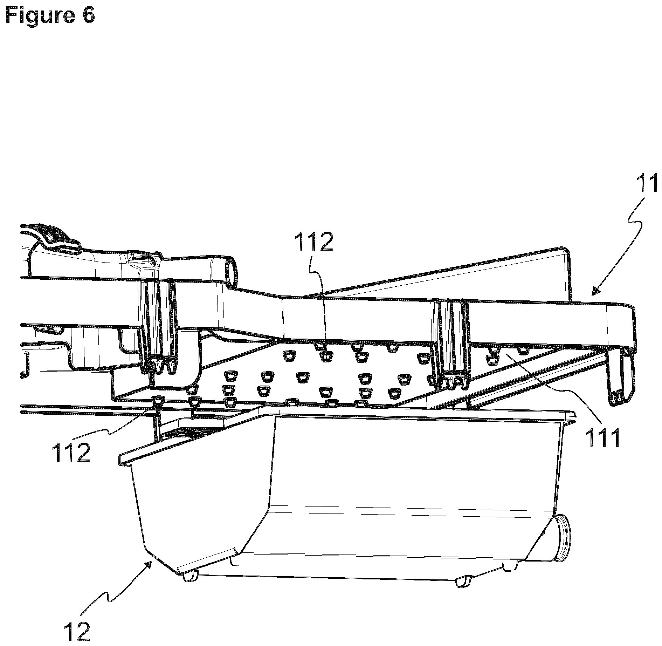

Referring to Figure 1, there are a first line (9) which enables the dirty water leaving the primary filter (8) to be transferred to the secondary filter (12), and a second line (10) which enables the clean water leaving the primary filter (8) to be transferred to the secondary filter (12). As better shown in Figure 6, there is a washing headpiece (11) which is connected to the second line (10) through which the clean water flows and which enables the water to be sprayed from multiple points onto the secondary filter (12) positioned thereunder. The clean water coming from the said washing headpiece (11) and the dirty water coming from the first line (9) pass through the secondary filter (12) to be filtered, and the filtered water is transferred back to the tub (2) through a third line (13). The third line (13) particularly ensures that the water passing through the secondary filter (12) disposed in a housing in the detergent dispenser (16) is returned back to the tub (2). The water delivered from here back to the circulation line (7) by means of the circulation pump (5) passes into the drum (1) or the primary filter (8) through the circulation valve (6). The circulation water directed to the drum (1) by means of the circulation valve (6) is transferred into the drum (1) through the drum nozzle(s) (61). The circulation valve (6) directs the flow in the circulation line (7) to deliver the water to the filtration system for filtration when necessary and directs the same to the drum nozzle (61) to wash the laundry when required. The second line (10) may be directly connected to the washing headpiece (11), or may be connected to a spray lid wherein the washing headpiece (11) is also disposed and which also washes the detergent dispenser (16). An integrated extension of the spray lid may form the washing headpiece (11) so as to be positioned above the secondary filter (12). The spray lid may also extend over the detergent compartment.

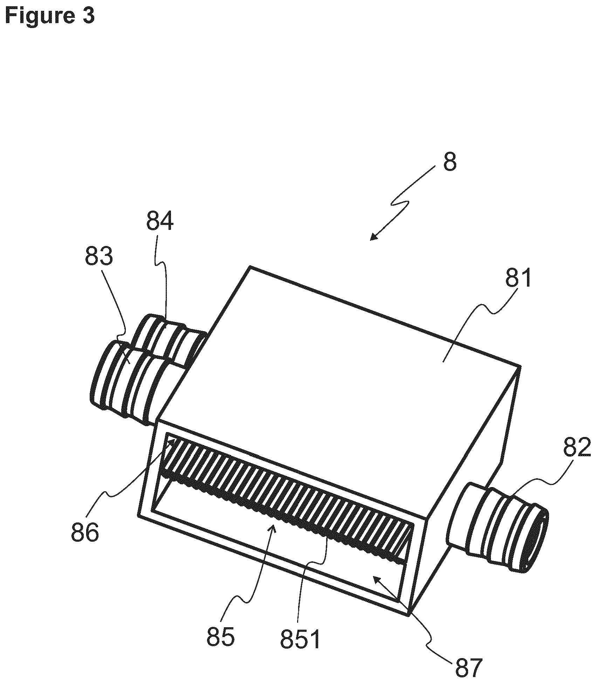

Referring to Figure 3, the primary filter (8) comprises a casing (81) which forms the main body of the primary filter (8), and a filter section (85) which is disposed in the said casing (81) and which performs filtration. In the casing (81), there are a series of filtering protrusions (851) arranged preferably at an inclination relative to the water flow direction and aligned with each other. The primary filter (8) further comprises a water inlet region (82) which is connected to the circulation line (7) at one end; a first water outlet region (83) which is connected to the first line (9) at the other end and through which the water in the casing (81) passes through without being sufficiently filtered; and a second water outlet region (84) which is connected to the second line (10) and through which the water in the casing (81) passes after being filtered. This ensures the separation of the incoming water.

The primary filter (8) comprises a first chamber (86) which is supplied with water containing solid waste, and a second chamber (87) which is filled with water almost completely cleansed of solid waste. The filter section (85) between the first chamber (86) and the second chamber (87) separates the first chamber (86) and the second chamber (87) from each other. Some of the water containing solid waste, which enters the primary filter (8) with a certain flow rate, flows through the first chamber (86) and leaves the primary filter (8) through the first water outlet region (83). At the same time, some of the water passing through the first chamber (86) fills into the second chamber (87). By means of the filter section (85) provided between the first chamber (86) and the second chamber (87), it is ensured that a relatively higher amount of solid particles in the water remains in the first chamber (86). Thus, while the water containing relatively more solid particles in the first chamber (86) is discharged through the first water outlet region (83), the water containing relatively fewer solid particles in the second chamber (87) is transferred to the washing headpiece (11) through the second water outlet region (84).

In an embodiment of the present invention, the filtering protrusions (851), which are inclined against the direction of water flow in the primary filter (8), generate a vortex effect in the water flowing through the first chamber (86) depending on the spacing and length, thus directing the water with this effect. In the casing (81) due to the vortex effect, there are particles retained by the filter section (85) in the first chamber (86) and solid waste which passes into the second chamber (87) without being affected by this vortex. The water full of solid waste particles exits through the first water outlet region (83).

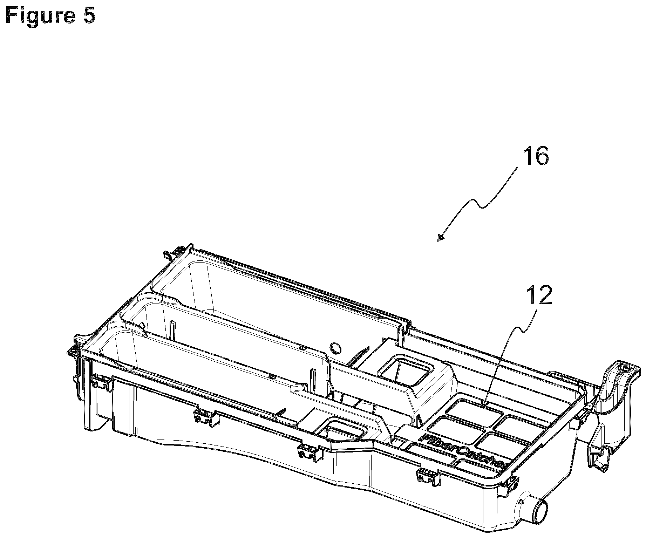

As shown in Figure 5, the secondary filter (12), where secondary filtration takes place, is preferably positioned in a housing in the detergent dispenser (16) in a detachable manner. In an embodiment of the present invention, the secondary filter (12) is a microfilter, and filters microplastics present among the fibers. The fibers breaking off from the laundry treated in the laundry washer and laundry washer/dryer mix into the washing water. The washing water is passed through the primary filter (8) in the circulation line (7), and then through the secondary filter (12) positioned in the detergent dispenser (16) so as to be cleansed of fibers. In an embodiment of the present invention, there may be an activated carbon filter in the secondary filter (12). Thus, by means of the adsorption of the microorganisms to the carbon surface of the active carbon filter, formation of odors during the rest period is eliminated.

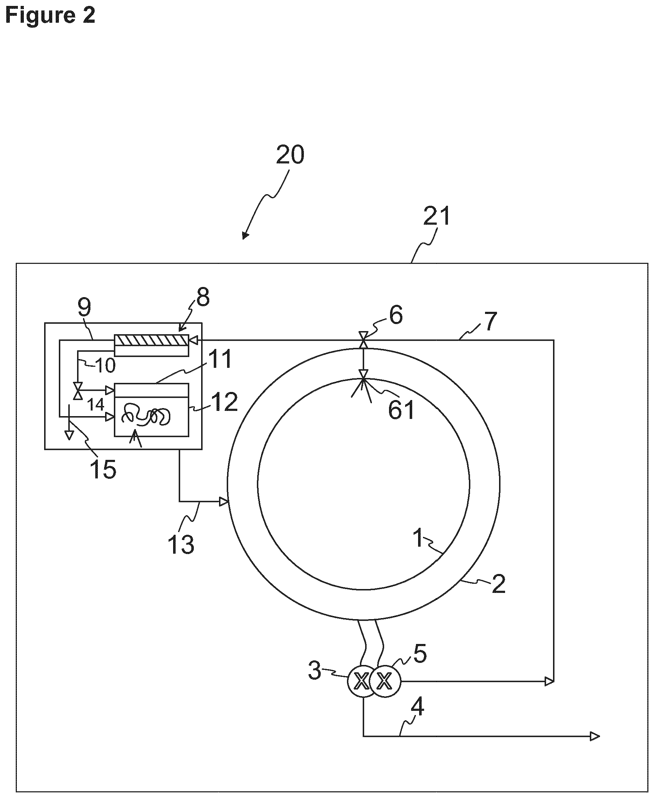

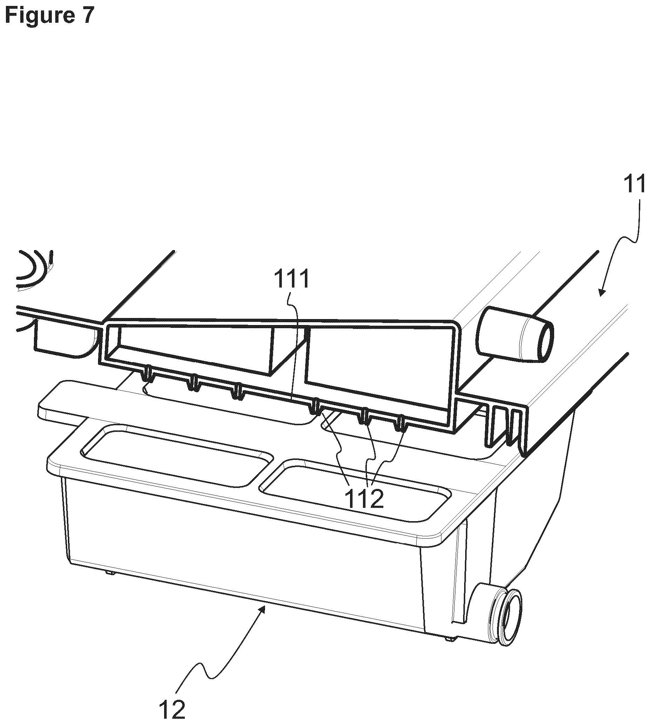

Referring to Figure 6 and 7, the washing headpiece (11) is provided, which is positioned at a distance from the secondary filter (12) and which enables the clean water coming from the second line (10) to be sprayed onto the secondary filter (12) from multiple points. The said washing headpiece (11), which is positioned directly above the secondary filter (12), is in the form of a rectangular prism and enables the water entering therein to be directed/sprayed toward the bottom through multiple points. Thus, since the contaminants retained on the active upper surface of the secondary filter (12), which performs the filtration, are removed from the surface at each washing step, the effective use of the internal volume and the economic life of the filter are increased. A series of spraying nozzles (112) are provided on the base surface (111) of the washing headpiece (11) facing the secondary filter (12). The said spraying nozzles (112) are distributed on the base surface (111) and enable the secondary filter (12) to be cleaned by spraying. Thus, the secondary filter (12) is enabled to be cleaned without drawing additional water from the mains. As shown in Figure 2, as an example to another embodiment of the present invention, a diverter valve (14) is provided, which is positioned on the second line (10) and which controls the water flow so as to allow the clean water coming from the second line (10) only during the rinsing step to be directed to the washing headpiece (11). Thus, the secondary filter (12) is enabled to be cleaned with the clean water only during the rinsing step. In this embodiment, when the filtration step is activated at the end of the main washing step, the purified water leaving the primary filter (8) is not directed to the washing headpiece (11), but the diverter valve (14), which is positioned before the washing headpiece (11), directs the water to the flow guiding path (15), and the water is then delivered to the detergent dispenser (16) and from there to the underside of the tub (2) again through the third line (13). When the filtration step is activated at the end of the rinsing steps, the clean water coming from the second line (10) is directed to the washing headpiece (11) with the opening of the diverter valve (14), and the secondary filter (12) is washed. In an embodiment of the present invention, the diverter valve (14) may be selected as a three-way valve.

In another embodiment of the present invention, the household appliance (20) comprises a discharge pump (3) which enables the filtered water to be discharged after the filtration process is completed, and a discharge line (4) which is connected to the said discharge pump (3). The circulation pump (5), which provides the transfer of the water in the circulation line (7), may be a jet pump. The discharge pump (3), which provides the discharge of the water from the discharge line (4), may also be a jet pump.

The first line (9), the second line (10), and the third line (13) may be configured in the form of a cylindrical, hollow, and flexible hose. The household appliance (20) of the present invention may be a washing machine, a laundry dryer, or a laundry washer/dryer.

## Claims

1. A household appliance (20) **comprising** a body (21); a tub (2) disposed in the body (21); a drum (1) which is disposed in the tub (2) and suitable to load the laundry; a circulation pump (5) disposed in the body (21) and enabling the water taken from the tub (2) to be circulated through a circulation line (7); a primary filter (8) having a water inlet region (82) connected to the circulation line (7) and performing prefiltering; and a secondary filter (12) enabling the fibers in the water to be filtered after the primary filter (8), **characterized by**
- a first line (9) enabling the dirty water leaving the primary filter (8) to be transferred to the secondary filter (12);
- a second line (10) enabling the clean water leaving the primary filter (8) to be transferred to the secondary filter (12);
- a washing headpiece (11) connected to the second line (10) through which the clean water flows and enabling the water to be sprayed from multiple points onto the secondary filter (12) positioned thereunder; and
- a third line (13) enabling the water filtered by passing through the secondary filter (12) to be transferred back to the tub (2).

2. A household appliance (20) as in Claim 1, **characterized by** the primary filter (8) having a casing (81) and a filter section (85) disposed in the said casing (81) and performing filtration.

3. A household appliance (20) as in Claim 2, **characterized by** the filter section (85) having a series of filtering protrusions (851) arranged at an inclination relative to the water flow direction and aligned with each other.

4. A household appliance (20) as in Claim 2 or 3, **characterized by** the primary filter (8) having a water inlet region (82) connected to the circulation line (7) at one end; a first water outlet region (83) connected to the first line (9) at the other end and through which the water in the casing (81) passes through without being filtered; and a second water outlet region (84) connected to the second line (10) and through which the water in the casing (81) passes after being filtered.

5. A household appliance (20) as in Claim 3 or 4, **characterized by** the primary filter (8) having a first chamber (86) to which the water in the circulation line (7) reaches first; a second chamber (87) wherein the water is filled after being substantially cleansed of solid waste; and the filter section (85) separating the first chamber (86) and the second chamber (87) from each other.

6. A household appliance (20) as in any one of the above claims, **characterized by** the secondary filter (12) which is suitable to be positioned in a housing in a detergent dispenser (16) in a detachable manner.

7. A household appliance (20) as in any one of the above claims, **characterized by** the washing headpiece (11) positioned at a distance from the secondary filter (12) and which enabling the clean water coming from the second line (10) to be sprayed onto the secondary filter (12) from multiple points.

8. A household appliance (20) as in Claim 7, **characterized by** a series of spraying nozzles (112) positioned on the base surface (111) of the washing headpiece (11) facing the secondary filter (12).

9. A household appliance (20) as in any one of the above claims, **characterized by** a diverter valve (14) positioned on the second line (10) and controlling the water flow so as to allow the clean water coming from the second line (10) only during the rinsing step to be directed to the washing headpiece (11).

10. A household appliance (20) as in any one of the above claims, **characterized by** a discharge pump (3) enabling the filtered water to be discharged after the filtration process is completed, and a discharge line (4) connected to the said discharge pump (3).

11. A household appliance (20) as in any one of the above claims **characterized by** being a washing machine.

12. A household appliance (20) as in any one of Claims 1 to 10, **characterized by** being a laundry dryer.

13. A household appliance (20) as in any one of Claims 1 to 10, **characterized by** being a laundry washer/dryer.
